# EUROPEAN PATENT APPLICATION

(11) **EP 1 078 962 A1**
(43) Date of publication of application: **28.02.2001**
(21) Application number: 00307323.6
(22) Date of filing: 24.08.2000
(51) Int. Cl.: C09D 11/16

(54) **Ink for a plate pen**

(30) Priority: 25.08.1999 JP 27728899
(71) Applicant: Kabushiki Kaisha Pilot, Tokyo 141-8553 (JP)
(72) Inventor: Komatsuzawa, Tadashi, Hiratsuka-shi, Kanagawa (JP); Kiyomoto, Hiroshi, Hiratsuka-shi, Kanagawa (JP)
(74) Representative: Baverstock, Michael George Douglas

(57) **Abstract**

An ink for a plate pen which prevents spouting of ink from the nib, and has a good penetrating and drying ability of writing on writing material, comprises a penetrant and a coloring agent, a humectant and water, wherein the viscosity at 20°C is from 1.2 to 10 mPa·s and the surface tension is from 35 to 55 dyne/cm. The penetrant can be a glycol ether represented by the following formula

R₁-(O-R₂)ₓ-O-R₃

wherein R₁ is an alkyl group having 2 to 4 carbon atoms or a phenyl group, R₂ is "-CH₂-CH₂-" or "-CH₂CH(CH₃)-", R₃ is H or an alkyl group having 1 to 6 carbon atoms, and X is an integer of 2 or 3.

## Description

The present invention relates to an ink for a pen, particularly for a plate pen having a plurality of thin plates adhered together to form capillary spaces between the plates, which capillary spaces are used as an ink path.

Plate pens as writing tools are known and are described in Japanese Patent Laid-Open Publication No. 52976/1996. A plate pen can provide ink steadily and allows the selection of a wide variety of writing widths and the angle of writing can be changed freely, so that a plate pen is excellent as a calligraphy pen. However, this function only operates in monochrome. If the use of the gradation function is attempted in multicolor, it is the sole means of contacting a syringe or a pen body of the other writing tool with a paper-touching part of the point of the plate pen body to supply ink of a different color. In this method, however, it is difficult to regulate a required quantity of each ink color, and therefore the effect of the multicolor writing is insufficient and the method lacks freedom of gradation.

An ink for this particular type of plate pen is not known.

A plate pen is formed by preliminarily stacking a plurality of thin plates, and providing a capillary space between the plates. The pen body utilizes the capillary space as an ink passage. Accordingly, the amount of ink used is about ten to twenty times as much as that of a conventional fountain pen, and thus it consumes an extremely large amount of ink. For this reason, a particular type of performance is required from the ink.

For example, it is necessary to prevent the ink from spouting from the nib. Good penetrating characteristics and drying ability of ink that is written on a writing material are also requisite features. The present invention provides an ink for a plate pen wherein such requirements are met.

The present invention relates to an ink for a plate pen which comprises a penetrant and a coloring agent, a humectant and water; wherein the viscosity at 20°C is from 1.2 to 10 mPa's and the surface tension is from 35 to 55 dyne/cm. In particular, the penetrant can comprise a glycol ether represented by the following formula (I):

R₁-(O-R₂)ₓ-O-R₃ (I)

wherein R₁ is an alkyl group having 2 to 4 carbon atoms or a phenyl group, R₂ is "-CH₂-CH₂-" or "-CH₂CH(CH₃)-", R₃ is H or an alkyl group having 1 to 6 carbon atoms, and X is an integer of 2 or 3. The penetrant may be 3-methyl-3-methoxybutanol. The penetrant may also be a glycol ether as defined hereafter.

The ink of the present invention is supplied to the point of the pen through the capillary spaces formed by gaps between the thin plates stacked in the plate-type pen body. When the viscosity of the ink exceeds 10 mPa's, the supply of ink to the nib becomes insufficient and continuity of writing is lost, and thus so-called "insufficient following" occurs. When the viscosity of the ink is less than 1.2 mPa's it becomes difficult to formulate an ink possessing the characteristics of attainment of dry-up resistance and high density writing. Accordingly, the viscosity of the ink is necessarily from 1.2 mPa's to 10 mPa's, even though the viscosity of the ink can be outside of this scope for other purposes.

Furthermore, even when the viscosity of the ink is from 1.2 mPa's to 10 mPa's, the ink may spout out of the nib and also blotting of the writing may occur if the surface tension of the ink is less than 35 dyne/cm even though the surface tension can be in this range for other purposes. When the surface tension is more than 55 dyne/cm the ink in the reservoir is not replaced with air, which results in insufficient ink-flow, even though the surface tension of the ink can be in this range for other purposes. Consequently, it is desired that the ink for a plate pen has a viscosity of 1.2 mPa's to 10 mPa's and a surface tension of 35 dyne/cm to 55 dyne/cm.

In the present invention, a specific penetrant can be used. A plate pen in which the ink of the present invention is to be used is a writing tool which consumes a large amount of ink and which has an ink-flow rate ten to twenty times larger than a conventional writing tool. Therefore, poor drying ability on paper on which a large amount of writing is performed has been a problem.

Since paper is a porous body composed of highly hydrophilic cellulose molecules, it is prone to absorb ink and thus is, without further treatment, in a condition in which blotting will easily occur. That is, it is extremely prone to get wet.

Paper used for writing is usually subjected to sizing treatment (making the paper hydrophobic) in order to prevent blotting of the ink and to adjust absorption of the ink. Sizing is carried out to fill gaps and chinks on the surface and inside of the paper with a sizing agent (an agent for making paper hydrophobic), so that wettability with ink is adjusted (making the paper less wettable) and the occurrence of blotting and strike through is avoided.

Consequently, when writing with an aqueous ink on a sized paper, there usually exists "a wetting time" until penetration of the ink starts, i.e., a phenomenon that a certain time is needed until ink begins to penetrate into the paper. As a result, penetration of ink requires much time. Especially, since a plate pen in which the ink of the present invention is used is a type of pen which consumes a large amount of ink, the penetrating ability of ink has been a problem.

In the present invention, a penetrant is used in order to improve penetrating ability. The penetrant used in the present invention can in particular be a glycol ether represented by the formula (I) and/or 3-methyl-3-methoxybutanol, and its use increases the drying ability of the written ink and enhances the penetrating ability so as to prevent lack of clarity of the writing due to blotting.

The effects of the penetrant used in the present invention will be explained.

Paper is a porous structure and can be considered as an assembly of many capillaries. In general, the depth of penetration of ink into a paper (h) is shown according to the Lucas-Washburn equation represented by the following:$\text{h =} \sqrt{\frac{\text{γrt cos θ}}{\text{2η}}}$
h: depth of penetration of the ink
γ: surface tension of the ink
r: radius of capillary of the paper
θ: contact angle between ink and paper
η: viscosity of the ink
t: time for penetration of the ink

From the equation, the time for penetration of the ink (t) is deduced as follows:

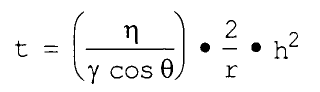

Accordingly, in order to shorten the time for penetration, it would be effective to design an ink wherein the viscosity of the ink is reduced, the surface tension is increased, and the contact angle with the paper is decreased.

In the present invention, attention is focused particularly on decreasing the contact angle with the paper. That is, addition of the above-mentioned penetrant to the ink enhances wettability with a sized paper, whereby the resulting ink penetrates quickly in the vertical direction prior to the occurrence of inhomogeneous blotting on the paper surface. Thereby, even if writing is conducted with a plate pen which consumes a large amount of ink, the written ink has good drying ability on paper and does not cause any deterioration of writing such as blotting. The scientific reason why good results are obtained by the use of the penetrant represented by the above equation is not clear, but it is considered that a good matching of the sizing agent used for the writing paper with the wettability of the penetrant of the present invention would result in the good penetrating effect.

Next, the ink of the present invention will be explained more specifically.

The following can be used as the penetrant:

Examples of glycol ethers having the formula (I) are as follows:
glycol ethers such as diethylene glycol monobutyl ether, triethylene glycol monobutyl ether, and diethylene diglycol, which be used alone or as a combination with two or more of them.

Other than these, 3-methyl-3-methoxybutanol is also preferred.

The amount of the penetrant to be used is preferably from 0.5 to 3.0%.

As the humectant, the following can be used:

Polyhydric alcohols such as ethylene glycol, diethylene glycol, triethylene glycol, propylene glycol, butylene glycol, 1,3-butylene glycol, hexylene glycol, glycerol, polyethylene glycol; and urea may be used alone or as a combination of two or more of them. The amount to be used is preferably from 2 to 30%.

Dyes and pigments are used as the coloring agent.

A larger amount of the coloring agent is required for an ink for a plate pen as compared with ink for a ballpoint pen. The coloring agent is preferably present in the ink in an amount of 5 to 15% by weight.

Dense and clear writing is required for writing with a plate pen and therefore the amount of coloring agent is large. When less than 5% by weight, the writing becomes pale, and stability during storage is reduced when more than 15% by weight. Therefore, both of these situations are not preferred.

However, because a pale color tone has also become desirable in recent times, ink containing 2.5% by weight to 5% by weight of coloring agent is also included in the present invention.

Examples of suitable coloring agents are as follows:
Acid dyes:
   Acid Yellow 1, 3, 6, 7, 11, 17, 19, 23, 36, 40, 42 and 49;
   Acid Orange 1, 7, 8, 10, 19, 28, 43, 51, 56, 63 and 67;
   Acid Red 1, 6, 14, 18, 27, 32, 42, 51, 52, 73, 82, 87, 92, 94, 97, 114, 134, 249 and 289;
   Acid Violet 7, 11, 15, 43, 49 and 66;
   Acid Blue 1, 7, 9, 15, 22, 23, 40, 41, 45, 59, 62, 74, 78, 83, 90, 103 and 217;
   Acid Green 3, 7, 9, 16, 19, 20, 25, 27, 36, 41 and 44;
   Acid Brown 2, 4, 13, 14, 20 and 27; and
   Acid Black 1, 2, 7, 24, 26, 31, 48, 52 and 94. Direct dyes:
   Direct Yellow 12, 44 and 132;
   Direct Orange 49;
   Direct Red 39, 4, 9, 23, 4, 9, 23, 31 and 227;
   Direct Blue 6, 1, 15, 86, 87 and 199; and
   Direct Black 17, 19, 32, 38, 51, 74 and 154.
Food Colors:
   Food Black 2; and
   Food Yellow 3.
Organic Pigments:
   C.I. Pigment Yellow 1, 2, 3, 5, 12, 13, 14, 15 and 83;
   C.I. Pigment Orange 1, 5, 13, 16, 17 and 24;
   C.I. Pigment Red 1, 2, 3, 4, 5, 7, 9, 12, 22, 23, 37, 38, 48, 50, 51, 63, 81, 83, 88, 112 and 214;
   C.I. Pigment Violet 1, 2, 3 and 23;
   C.I. Pigment Blue 1, 2, 15, 16 and 17;
   C.I. Pigment Green 2, 7, 8 and 10;
   C.I. Pigment Brown 1, 2 and 5; and
   C.I. Pigment Black 1 and 7.

Other than the above, fluorescent dyes, fluorescent pigments, and processed pigments are also usable. Both the dyes and pigments can be used alone or as a combination or two or more of them.

When acid dyes and direct dyes are used for the ink, a pH of 8 to 11 is preferable owing to the enhanced solubility of dyes in the ink. Because papers currently used are acid papers and therefore writing with ink changes their color with the passage of time, it is effective for preservation of the writing to make the ink alkaline at pH 8 to 11.

Other than the above, a rust preventive and a preservative may be optionally used.

### Examples

Next, the present invention is specifically explained with reference to the examples.

### Example 1

| | |
|---|---|
| Ethylene glycol | 9.0% by weight |
| Urea | 5.0% by weight |
| 1,2-Benzothiazoline-3-one | 0.2% by weight |
| 3-Methyl-3-methoxybutanol | 2.0% by weight |
| Triethanolamine | 1.0% by weight |
| Benzotriazole | 0.2% by weight |
| C.I. Acid Blue 90 | 7.0% by weight |
| Ion exchange water were mixed to form an ink. | remainder |

### Examples 2 to 6

Inks were formed in a similar manner to Example 1 with the exception that compositions of the inks were changed as shown in Table 1.

### Comparative Examples 1 to 4

Inks were formed in a similar manner to Example 1 with the exception that compositions of the inks were changed as shown in Table 1.

**Table 1**

| | Examples | | | | | | Comparative Examples | | | |
|---|---|---|---|---|---|---|---|---|---|---|
| | 1 | 2 | 3 | 4 | 5 | 6 | 1 | 2 | 3 | 4 |
| Ethylene glycol | 9.0 | 9.0 | | | | 9.0 | | | 9.0 | |
| Polyethylene glycol 200 | | | | | 9.0 | | | | | |
| Glycerol | | | | | | | | | | 9.0 |
| Polyglycerol | | | 15.0 | 25.0 | | | 30.0 | 40.0 | | |
| Urea | 5.0 | 5.0 | 5.0 | 5.0 | 5.0 | 5.0 | 5.0 | 5.0 | 5.0 | 3.0 |
| 1,2-Benzothiazoline-3-one | 0.2 | 0.2 | 0.2 | 0.2 | 0.2 | 0.2 | 0.2 | 0.2 | 0.2 | 0.2 |
| 3-Methyl-3-methoxy-butanol | 2.0 | 2.0 | 2.0 | 2.0 | | 1.5 | 2.0 | 2.0 | | |
| Diethylene glycol monobutyl ether | | | | | 2.0 | | | | | |
| Polyoxyethylenea lkyl ether phosphoric ester | | | | | | | | | 0.5 | |
| Triethanolamine | 1.0 | 1.0 | 1.0 | 1.0 | 1.0 | 1.0 | 1.0 | 1.0 | 1.0 | 1.0 |
| Benzotriazole | 0.2 | 0.2 | 0.2 | 0.2 | 0.2 | 0.2 | 0.2 | 0.2 | 0.2 | 0.2 |
| C.I. Acid Blue 90 | 7.0 | | | | | | | | | |
| C.I. Acid Blue 9 | | | | | 3.0 | | | | | |
| C.I. Acid Red 18 | | | | | | 0.7 | | | | |
| C.I. Acid Red 92 | | | | | | 4.3 | | | | |
| C.I. Acid Yellow 23 | | | | | | | | | | 3.0 |
| C.I. Food Black 2 | | 8.0 | 8.0 | 8.0 | | | 8.0 | 8.0 | 8.0 | |
| Ion exchange water | Remainder | Remainder | Remainder | Remainder | Remainder | Remainder | Remainder | Remainder | Remainder | Remainder |
| (Note) Unit of the values in Table 1 is weight %. | | | | | | | | | | |

The performance of Examples 1 through 6 and Comparative Examples 1 through 4 is shown in Table 2.

**Table 2**

| | | Examples | | | | | | Comparative Examples | | | |
|---|---|---|---|---|---|---|---|---|---|---|---|
| | | 1 | 2 | 3 | 4 | 5 | 6 | 1 | 2 | 3 | 4 |
| (A) | PH | 8.5 | 8.7 | 8.8 | 8.7 | 8.8 | 9.0 | 8.6 | 8.6 | 8.4 | 8.8 |
| | Viscosity (20 °C) mPa·S | 2.2 | 2.4 | 4.9 | 10.0 | 2.1 | 1.9 | 14.6 | 34.0 | 2.3 | 1.7 |
| | Surface Tension (dyne/cm) | 47.0 | 53.0 | 51.2 | 51.0 | 51.1 | 55.0 | 51.2 | 51.5 | 29.0 | 60.1 |
| (B) | Ink-Flowability | ○ | ○ | ○ | ○ | ○ | ○ | × | × | ○ | × |
| | Blotting | ○ | ○ | ○ | ○ | ○ | ○ | ○ | ○ | × | ○ |
| | Penetrating Ability | ○ | ○ | ○ | ○ | ○ | ○ | ○ | Δ | ○ | × |
| | Hanging | ○ | ○ | ○ | ○ | ○ | ○ | ○ | ○ | × | ○ |
| (Note) (A): Physical properties. (B): Evaluation ○ : Good and acceptable. Δ : Fair and acceptable. × : Bad and not acceptable. | | | | | | | | | | | |

As apparent in the above, when the surface tension is lower than the lower limit of 35 to 55 dyne/cm, blotting or hanging tend to occur, even if the viscosity of the ink for a plate pen is in the range of 1.2 to 10 mPa's. On the other hand, if viscosity and/or surface tension exceed(s) each upper limit, following ability and penetrating ability can be reduced.

When applied to a plate pen where a large amount of ink is supplied to a writing material, the present invention exhibits excellent effects of forming good writing with excellent penetrating ability of the ink without occurring problems of insufficient following when writing; blotting, or hanging of ink from the nib.

The disclosure of Japanese Patent Application No. 11-227288 filed August 25, 1999, including specification, drawings and claims are herein incorporated by reference in its entirety.

Although only some exemplary embodiments of this invention have been described in detail above, those skilled in the art will readily appreciate that many modifications are possible in the exemplary embodiments without materially departing from the novel teachings and advantages of this invention. Accordingly, all such modifications are intended to be included within the scope of this invention.

## Claims

1. An ink for a plate pen comprising a penetrant and a coloring agent, a humectant and water, wherein the viscosity at 20°C is from 1.2 to 10 mPas and the surface tension is from 35 to 55 dyne/cm.

2. The ink for a plate pen according to claim 1, wherein the penetrant comprises a glycol ether represented by the following formula (I):
R₁-(O-R₂)ₓ-O-R₃ (I)
wherein R₁ is an alkyl group having 2 to 4 carbon atoms or a phenyl group, R₂ is "-CH₂-CH₂-" or "-CH₂CH(CH₃)-", R₃ is H or an alkyl group having 1 to 6 carbon atoms, and X is an integer of 2 or 3.

3. The ink for a plate pen according to claim 1 wherein the penetrant is 3-methyl-3-methoxybutanol.

4. The ink for a plate pen according to claim 1, wherein the penetrant is a glycol ether having a vapor pressure of 0.01 to 0.5 mmHg, a boiling point of 150 to 280°C, a surface tension of 25 to 35 dyne/cm, and a viscosity of 1.2 to 10 mPa's at 20°C and 760 mmHg.

5. The ink for a plate pen according any one of the preceding claims wherein the coloring agent is present in the ink in an amount of 5 to 15% by weight.

6. The ink for a plate pen according to any one of the preceding claims, wherein the blending amount of the penetrant is from 0.5 to 3.0% by weight.

7. The ink for a plate pen according to any one of the previous claims, wherein the pH of the ink is from 8 to 11.

8. Use of the ink according to any one of the preceding claims in a plate pen.

9. A plate pen when charged with the ink according to any one of claims 1 to 7.
